# EUROPÄISCHE PATENTANMELDUNG

(11) **EP 3 015 255 A1**
(43) Veröffentlichungstag der Anmeldung: **04.05.2016**
(21) Anmeldenummer: 14190477.1
(22) Anmeldetag: 27.10.2014
(51) Int. Cl.: B29C 70/52, F16S 3/00, B29C 70/46, B29C 70/86, B29D 99/00

(54) **Kontinuierliche Herstellung von Profilen in Sandwichbauweise mit Schaumkernen und Hartschaum gefülltes Profil**

(71) Anmelder: Evonik Röhm GmbH, 64293 Darmstadt (DE)
(72) Erfinder: BÜHLER, Sebastian, 79104 Freiburg (DE); KRISHNAMOORTHY, Sivakumara K.,, 64319 Pfungstadt (DE); BERLIN, Mark, Reinhard, 45665 Recklinghausen (DE); SEMLITSCH, Karl-Heinz, 8680 Mürzzuschlag (AT)

(57) **Zusammenfassung**

Die vorliegende Erfindung betrifft ein neuartiges Verfahren zur Herstellung von neuen faserverstärkten Profilwerkstoffen, die mit einem Hartschaumkern, insbesondere einem PMI-Schaumkern gefüllt sind. Mit dem erfindungsgemäßen Verfahren wird in einem Verfahrensschritt ein komplexer faserverstärkter Profilwerkstoff kontinuierlich hergestellt und gleichzeitig mit dem Hartschaumkern gefüllt. Weiterhin wird im gleichen Verfahrensschritt eine sehr gute Anbindung des Hartschaumkerns an das faserverstärkte Profilmaterial gewährleistet. Insbesondere betrifft die vorliegende Erfindung eine neuartige Ausführungsform des Verfahrens, mit der es möglich ist, lokale Verstärkungen im Mantelmaterial des Profilwerkstoffs zu realisieren bei einer gleichzeitig hohen Variabilität bezüglich der Formgebung. Die genannten Verstärkungen werden durch die Auflage in der Länge begrenzter Faserabschnitte mittels einer speziell dafür konstruierten Vorrichtung realisiert.

## Beschreibung

### Gebiet der Erfindung

Die vorliegende Erfindung betrifft ein neuartiges Verfahren zur Herstellung von neuen faserverstärkten Profilwerkstoffen, die mit einem Hartschaumkern, insbesondere einem PMI-Schaumkern gefüllt sind. Mit dem erfindungsgemäßen Verfahren wird in einem Verfahrensschritt ein komplexer faserverstärkter Profilwerkstoff kontinuierlich hergestellt und gleichzeitig mit dem Hartschaumkern gefüllt. Weiterhin wird im gleichen Verfahrensschritt eine sehr gute Anbindung des Hartschaumkerns an das faserverstärkte Profilmaterial gewährleistet. Insbesondere betrifft die vorliegende Erfindung eine neuartige Ausführungsform des Verfahrens, mit der es möglich ist, lokale Verstärkungen im Mantelmaterial des Profilwerkstoffs zu realisieren bei einer gleichzeitig hohen Variabilität bezüglich der Formgebung. Die genannten Verstärkungen werden durch die Auflage in der Länge begrenzter Faserabschnitte mittels einer speziell dafür konstruierten Vorrichtung realisiert.

### Stand der Technik

Nach Stand der Technik können mit PMI-Schäumen gefüllte Hohlkörper mittels des so genannten In-Mold-Verfahren hergestellt werden. Dabei werden die fertigen Hohlkörper mit einem Granulat gefüllt, welches anschließend thermisch aufgeschäumt wird und dabei vernetzt. Nachteil dieses Verfahrens ist, dass man mehrere Verfahrensschritte, nämlich die Hohlkörperherstellung, das Füllen mit dem Granulat und das Aufschäumen benötigt. Ein weiterer Nachteil ist, dass aufgrund der relativ hohen Schäumungstemperaturen des PMI thermisch instabile Materialien, wie ein Composite aus Kohlefasern und einem Epoxidharz, nicht verwendet werden können. Darüber hinaus ist die beim Aufschäumen bewirkte Anbindung zwischen Schaum und Deckschicht nur schwach ausgebildet. Ein solches In-Mold-Verfahren ist beispielsweise in WO 2012/013393 beschrieben. PUR-Schaumfüllungen werden alternativ nach Stand der Technik als Flüssigkeit in den Hohlraum injiziert und anschließend aufgeschäumt und ausgehärtet. Dieses Verfahren bringt jedoch zum einen ähnliche Nachteile wie das beschriebene Verfahren zur PMI-Schaumfüllung mit sich und ist darüber hinaus nicht auf PMI übertragbar.

Alternativ können offene Schalenteile mit einem zugeschnittenen Schaumkern ausgefüllt werden und anschließend ein zweites Schalenteil unter Bildung des Hohlprofils mit dem ersten Schalenteil verklebt oder verschweißt werden. Zur besseren Anbindung des Schaumkerns, kann an den Grenzflächen darüber hinaus eine Klebeschicht aufgetragen werden. Nachteile dieses Verfahrens sind, dass sehr viele zeitaufwendige Prozessschritte benötigt werden, dass das Endprodukt Fügestellen aufweist, und dass bei der Herstellung des Schaumkerns je nach Form desselben eine große Menge Verschnittmaterial anfallen kann.

In einer Variante, wie sie in WO 2012/052219 beschrieben ist, wird der Schaumkern zusammen mit dem Gewebematerial - wie z.B. Kohlefasern - in einer Form eingelegt und das Harz - z.B. Epoxidharz - in diese Form eingespritzt und ausgehärtet. Zwar werden hier Fügestellen vermieden, dafür weist dieses Verfahren in Bezug auf Verschnitt, Prozessgeschwindigkeit und Aufwendigkeit die gleichen Nachteile wie das zuvor beschriebene Verfahren auf.

Das Pultrusionsverfahren, das auch unter dem deutschen Namen Strangziehverfahren bekannt ist, ist ein etabliertes Verfahren, das auf erste Entwicklungen Anfang der 1950er Jahre zurückgeht. Das Pultrusionsverfahren wird dazu verwendet, kontinuierlich faserverstärkte Kunststoffprofile, wie z.B. auch Hohlprofile, insbesondere Rohre, herzustellen. Ursprünglich wurden dabei mehrere Glasfasern (Glasrovings) mit einem Polyester- oder einem Epoxidharz imprägniert, anschließend über ein oder mehrere Formgebungswerkzeuge in die endgültige Form zusammengeführt. Abschließend wird das Harz ausgehärtet und das kontinuierlich produzierte Profil zu einzelnen Werkstücken zersägt.

Bei dem Pultrusionsverfahren handelt es sich insbesondere um ein Verfahren, bei dem in einem ersten Verfahrensschritt mehrere Fasern oder Rovings mit einem Harz getränkt werden. Man unterscheidet dabei zwischen einem so genannten offenen Pultrusionsverfahren, bei dem diese Harztränkung in einer Tränkwanne erfolgt, durch die die Fasern geführt werden, und einem geschlossenen Verfahren, bei dem die Tränkung mit dem Harz erst in dem eigentlichen formgebenden Instrument unter Druck erfolgt. In der Regel weisen die Anlagen vor der Tränkung Vorrichtungen, wie z.B. Kadiergitter, auf, mittels derer die Fasern in eine zur späteren Formgebung nötige Verteilung gebracht werden und optional vorgelegte Rovings in einzelne Fasern aufgebrochen werden können. Es ist auch möglich alternativ oder ergänzend zu Rovings bzw. Fasern Vliese, Gewebe und/oder Gelege als Fasermaterial einzusetzen.

In der internationalen Patentanmeldung WO 2013/174665 ist ein so genanntes Pul-Core-Verfahren zur Herstellung von Profilen mit einem Schaumkern und einer Composite-Ummantelung beschrieben. Ein solches Verfahren ist jedoch auf die Herstellung von gleichbleibenden, z.B. rohrförmigen Querschnitten beschränkt. Komplexere Formen, wie z.B. im einfachsten Fall Variationen des Querschnitts im Profilwerkstoff, können nach Stand der Technik nur mittels einem zeitaufwendigen Hand-Layup-Verfahren oder einem diskontinuierlichen RTM-Verfahren (Resin Transfer Molding) realisiert werden.

In der Europäischen Patentanmeldung mit dem Anmeldeaktenzeichen 13190866 sind Pul-Shape- und Pul-Press-Verfahren zur Herstellung von faserverstärkten und Schaumkern gefüllten Profilen offenbart. Dieses Verfahren ist gegenüber allen anderen im Stand der Technik offenbarten Verfahren deutlich schneller und führt zu deutlich gesteigerten Produktionsmengen.

Jedoch ist es mit diesem wie auch den zuvor beschriebenen Verfahren nicht möglich, lokale Verstärkungen des Mantelmaterials zu realisieren. Solche Verstärkungen sind jedoch nötig, um z.B. Schraubverbindungen nachträglich in dem Mantel, bzw. im Profilwerkstoff zu verankern und gleichzeitig an der dafür vorgesehenen Einfügestelle auch weiterhin für eine ausreichende Materialfestigkeit zu sorgen. Nach Stand der Technik müsste entweder der gesamte Mantel entsprechend dicker ausgelegt werden oder zumindest ein entsprechender Streifen des Mantels über die gesamte Länge des Profilwerkstoffs verstärkt werden. Dieses würde jedoch aufgrund der höheren Dichte des Harzes im Vergleich zum Hartschaumkern zu einer unnötigen Gewichtserhöhung des gesamten Profilwerkstoffs und zu einer Verminderung der Gestaltungsfreiheit in Bezug auf die Form des Produktes führen.

Im Zusammenhand der vorliegenden Erfindung werden die Begriffe Mantel und Deckschicht bzw. Mantelmaterial und Deckschichtmaterial jeweils synonym verwendet.

### Aufgabe

Die der vorliegenden Erfindung zugrundeliegende Aufgabe war es vor allem, ein neuartiges, kontinuierlich durchführbares Verfahren zur Herstellung von faserverstärkten, mit einem Hartschaummaterial wie z.B. einem PMI-Schaum gefüllten Profilen, das auch für komplexe Formen oder Variationen des Querschnittes im Werkstücke geeignet ist, zur Verfügung zu stellen. Dabei soll das Profil gegenüber dem Stand der Technik besonders gut nachträglich mit Schrauben, anderen Verankerungssystemen oder bei der Herstellung mit Inserts versehen werden können, ohne, dass dies die mechanische Stabilität der Profile beeinträchtigen würde oder eine deutlich höhere Auslegung des Profilgewichts nötig wäre.

Insbesondere war es Aufgabe der vorliegenden Erfindung, ein Verfahren zur Verfügung zu stellen, mit dem komplexe Profile in Sandwichbauweise mit Faser-Kunststoff-Verbund-Außenhaut (FKV-Haut) und Hartschaum-, insbesondere Poly(meth)acrylimid-Schaumkernen (P(M)I-Schaumkerne) derart realisiert werden können, dass die FKV-Haut lokal verstärkt ist.

Weiterhin war es Aufgabe der vorliegenden Erfindung, ein Verfahren zur Verfügung zu stellen, mittels dessen eine sehr gute Anbindung zwischen Schaumkern und äußeren Deckschichten ermöglicht wird. Weiterhin sollen mittels des erfinderischen Verfahrens auch bei der Schäumungstemperatur des PMI thermisch nicht belastbare Materialien als Deckmaterial verwendbar sein.

Darüber hinaus war es Aufgabe der vorliegenden Erfindung, neue, mit einem Hartschaumgefüllte Hohlprofile zur Verfügung zu stellen, die a) keine Klebschicht zwischen Deckmaterial des Hohlprofiles und dem Hartschaumkern aufweisen, b) keine Fügestellen aufweisen, c) eine gute Bindung zwischen Deckmaterial und Hartschaumkern haben und d) eine lokal verstärkte FKV-Haut aufweisen.

Weitere Aufgaben können sich aus der Beschreibung, den Zeichnungen bzw. den Beispielen ergeben, ohne dass diese an dieser Stelle explizit genannt werden.

### Lösung

Gelöst werden die Aufgaben mittels eines neuartigen Verfahrens zur kontinuierlichen Herstellung von komplexen faserverstärkten, insbesondere lokal verstärkten, mit einem Hartschaumkern, insbesondere einem P(M)I-Schaumkern, bevorzugt einem PMI-Schaumkern gefüllten Profilen. Bei diesem Verfahren handelt es sich in den ersten Verfahrensschritten um ein Pultrusionsverfahren, bei dem in der Mitte ein Schaumkern aus PMI zugeführt wird, und in den abschließenden Verfahrensschritten um einen eher dem RTM-Verfahren ähnlichen Prozess. Ein Schaumkern wird dabei mittels einem dem Pultrusionsverfahren analogen Verfahren mit einem Fasermaterial umwickelt, ohne dass dieses dabei jedoch bereits zwingend mit einem Harz getränkt ist. Die Tränkung mit dem Harz zur Bildung der Deckschicht aus dem Fasermaterial und dem Harz, bei dem es sich um einen Thermoplasten oder ein einen Duroplasten bildendes Reaktivharz handeln kann, erfolgt bevorzugt und in diesem Fall im Gegensatz zum bekannten Pultrusionsverfahren erst nach der Umwicklung des Schaumkerns. Zwar kann erfindungsgemäß die Tränkung des Fasermaterials mit dem Harz auch vor dem Umwickeln, z.B. mittels einer Führung der Fasern durch eine Harzwanne erfolgen, dieses Vorgehen hat jedoch gegenüber der bevorzugten Ausführungsform den Nachteil eines zusätzlichen Prozessschrittes.

Insbesondere zeichnet sich das erfindungsgemäße Verfahren dabei dadurch aus, dass zusätzlich eine lokal begrenzte Auflage eines Fasermaterials mittels einer speziell dafür entwickelten Vorrichtung erfolgt. Diese Vorrichtung weist dazu die folgenden Komponenten auf:
A ein Führungselement. Bei diesem Führungselement kann es sich zum Beispiel einfach um einen Schacht handeln, durch den die Fasern geleitet werden. Dieser Schacht kann zur genauen Ablage der Fasern beispielsweise drehbar, kippbar und/oder anders bewegbar sein. Alternativ kann es sich auch um Rollen handeln, die die Fasern passiv leiten oder sogar aktiv fördern.
B ein Positionierungselement, bei dem es sich um eine Vorrichtung handelt, mit dem die Fasern auf den Schaumkern oder auf eine bereits auf dem Schaumkern befindliche Faserschicht gedrückt werden. Dabei kann es sich beispielsweise um einen Stempel oder eine Hydraulikvorrichtung, insbesondere eine Art hydraulisch betriebenen Stempel handeln.
C ein Fixierungselement, welches als in Transportrichtung der Fasern bzw. des Schaumkerns letzte der genannten Elemente der Vorrichtung zur Fixierung der Fasern auf der Oberfläche des Schaumkerns bzw. eines bereits mit Fasern belegten Schaumkerns dient. Auch hier gibt es mehrere Möglichkeiten der Ausgestaltung. So kann es sich einfach um eine Düse handeln, die beispielsweise einen Haftklebstoff oder einen Haftvermittler aufsprüht. Alternativ nutzbar sind auch beispielsweise Breitschlitzdüsen, die einen entsprechenden Flüssigkeitsfilm auflegen, Rakel oder Rollen. Alternativ zur Aufbringung von solchen Haftvermittlern oder Klebstoffen ist es auch möglich die Fixierung mittels Bestrahlung zu bewirken. Dazu können beispielsweise IR- oder UV-Lampen oder auch Plasmaquellen verwendet werden. In einem solchen Fall wird entweder zuvor ein damit aushärtbares Klebsystem aufgetragen, oder die mit der Vorrichtung aufgebrachten Fasern werden bereits entsprechend beschichtet eingesetzt.

Und als letztes Element D weist die Vorrichtung ein bewegbares Trennelement auf, welches bevorzugt zwischen den Elementen A und B installiert ist. Mit diesem Trennelement werden die Fasern derart gekürzt, dass nur eine lokale Verstärkung der Faseroberfläche erzeugt wird. Bei den Trennelementen kann es sich beispielsweise um eine, zwei oder mehrere Klingen oder um eine Säge handeln. Alternativ ist auch eine thermische Trennung, beispielsweise mit einem beheizbaren Draht oder einer kleinen Flamme denkbar.

Zur lokalen Verstärkung ist es insbesondere möglich, mehrere Fasern, zum Beispiel auch in Form von Bündeln aufzulegen. Auch ist es möglich, dass die Komponenten A und eventuell C mehrfach vorliegen, um eine Gewebestruktur in der örtlich begrenzten Auflage zu ermöglichen. Auch ist es durchaus möglich, mehrere dieser Vorrichtungen in Reihe oder parallel zueinander zu installieren.

Im weiteren wird die lokale Auflage von Fasermaterial als Verfahrensschritt c) bezeichnet. Erfindungsgemäß kann dieser Verfahrensschritt c) vor, nach oder zwischen verschiedenen Ausführungen des Verfahrensschritts b), bei dem es sich um die Umwicklung des Schaumkerns mit Endlosfasern handelt, erfolgen. Auch kann Verfahrensschritt c) mehrfach, in frei wählbarer Reihenfolge zu verschiedenen Durchführungen des Verfahrensschritts b) erfolgen.

Das erfindungsgemäße Verfahren zur kontinuierlichen Herstellung von faserverstärkten, mit einem Schaumkern gefüllten Profilen weist insbesondere folgende Verfahrensschritte auf:
a) Einführen von Schaumkernen und Verbinden des neu eingeführten Schaumkerns mit dem Ende des zuletzt eingeführten Schaumkerns,
b) Umwickeln des Schaumkerns mit einem Fasermaterial, wobei dies mittels mindestens einem Verfahrensschritt in Form eines modifizierten Pul-Preforming-, Pul-Winding-, Pul-Braiding-Verfahrens oder einer unidirektionalen Auflage erfolgt,
c) Lokal begrenzte Auflage eines Fasermaterials, wie zuvor beschrieben,
d) Imprägnieren des gewickelten Fasermaterials mit einem Harz,
e) optionales Vorformen des umwickelten Schaumkerns in einem oder mehreren optionalen ersten Werkzeugen,
f) Heizen und dabei optionales Aushärten des Harzes in mindestens einem zweiten Werkzeug auf Schlitten,
g) Transport und optionales Abkühlen des umwickelten Schaumkerns in einem Transportschlitten und
h) Trennen einzelner Profile mittels Schneiden, Sägen oder einer anderen Methode und Entnahme des fertigen Werkstücks,
   wobei der oder die Schlitten mit dem zweiten Werkzeug und der Transportschlitten in jeweils einander entgegengesetzter Richtung bewegt werden.

Dabei sind die Verfahrensschritte b) und c) einerseits und d) andererseits nicht zwingend in der angegebenen Reihenfolge durchzuführen. In einer alternativen Ausführungsform der Erfindung können die Fasern auch erst durch eine Imprägniervorrichtung, wie ein Imprägnierbad geführt und anschließend um den Schaumkern gewickelt werden.

Bei dem Schaumkern handelt es bevorzugt um einen Kern aus Poly(meth)acrylimid. Besonders bevorzugt wird als Material für den Schaumkern Polymethacrylimid in einem Dichtebereich von 30 bis 200 kg/m³ verwendet.

Zu Verfahrensschritt a): Da der Schaumkern im Gegensatz zum Fasermaterial nicht auf Rollen mit mehreren hundert Metern Material vorgelegt werden kann, wird dieser bevorzugt in Form mehrerer, aneinander gereihter Einzelstücke kontinuierlich in die Pultrusionsanlage geführt. Dies kann händisch oder, insbesondere mit längennormierten Schaumstücken, automatisiert erfolgen. Diese Einzelstücke werden dann bevorzugt mittels Kleben, Stecken oder durch Hinzufügen eines Kupplungsstücks miteinander verbunden. Beim Stecken können die Schaumkerne dazu mit entsprechenden Nuten bzw. Aussparungen vorgefertigt sein. Beim Kleben ist es wichtig, dass der entsprechende Kleber schnell aushärtet. Das Auftragen des Klebers auf eine der Flächen kann dazu auch bei einem kontinuierlichen Betrieb händisch erfolgen. Kupplungsstücke wiederum können sich vorgefertigt jeweils an einem der beiden Enden der vorgelegten Schaumkernstücke befinden. Das zweite Schaumkernstück wird dann einfach in dieses Kupplungsstück gefahren. Alternativ kann es sich auch um zweiteilige Kupplungsstücke handeln, die sich komplementär an den beiden Enden des Schaumwerkstücks befinden und z.B. über einen einfach Clickmechanismus miteinander verbunden werden können. Idealerweise befinden sich diese Click-Stellen an Stellen des Schaumkerns, die später zwischen zwei fertigen Profilen gelegen sind.

Verfahrensschritt b): Die Wahl des geeigneten Fasermaterials, mit dem in Verfahrensschritt b) der Schaumkern umwickelt wird, stellt für den Fachmann kein Problem dar, da die verarbeitbaren Fasermaterialien aus der etablierten Pultrusionstechnologie bekannt sind. Bevorzugt handelt es sich bei dem Fasermaterial um Kohlefasern, Glasfasern, Polymerfasern, insbesondere Aramidfasern, oder Textilfasern, besonders bevorzugt um Aramid- oder Kohlefasern. Das Fasermaterial kann in Form einzelner Fasern, Rovings und/oder Vliese, Geweben und/oder Gelegen eingesetzt werden. Bevorzugt wird das Fasermaterial in Form von Endlosfasern oder -rovings eingesetzt.

Bei der Formgebung ist es möglich, dass die Fasern in Verarbeitungsrichtung parallel zu einander ausgerichtet um den Schaumkern liegen. Bevorzugt jedoch bilden die Fasern um den Schaumkern eine Gewebestruktur. Durch diese Ausführung wird eine besondere mechanische Festigkeit des späteren Werkstücks erreicht. Besondere Varianten des Verfahrensschritts b), wie insbesondere modifizierte Pul-Preforming-, Pul-Winding- oder Pul-Braiding-Verfahren können erfindungsgemäß hier gleichsam zu Einsatz kommen. Es können auch mehrere dieser Varianten miteinander kombiniert werden oder einzelne Varianten in Serie mehrfach installiert sein. So ist beispielsweise eine Anordnung Pul-Braiding, unidirektionale Faserführung und erneutes Pul-Braiding beispielsweise denkbar. Details über diese Varianten können beispielsweise in der WO 2013/174665 nachgelesen werden.

Bei der Formgebung ist es möglich, dass die Fasern in Verarbeitungsrichtung parallel zu einander ausgerichtet um den Schaumkern liegen. Bevorzugt jedoch bilden die Fasern um den Schaumkern eine Gewebestruktur. Durch diese Ausführung wird eine besondere mechanische Festigkeit des späteren Werkstücks erreicht.

Es gibt mehrere Varianten des Pultrusionsverfahren, von denen Aspekte einiger auf Verfahrensschritt b) des erfindungsgemäßen Verfahrens durch eine zusätzliche Schaumkernzuführung übertragbar sind.

Das Pul-winding-Verfahren ähnelt der grundsätzlichen Pultrusion. Jedoch werden bei diesem Prozess die Verstärkungsfasern durch rotierende Wickeleinrichtungen in unterschiedlichen Winkeln mit der Matrix überzogen und im Anschluss in einem formgebenden Werkzeug ausgehärtet. Durch diese Technologie kann man besonders hohe Belastungsanforderungen an Rohre, Stäbe bzw. andere Profilen erfüllen. Dieses Verfahren kann mit unterschiedlich rotierenden Winkeln ausgelegt werden. Die Winkelgrade sind in der Regel von 0° bis 85° einstellbar. Der Schaumkern wird dabei vom mit Harz getränkten Fasermaterial umgeben und mit diesem umwickelt.

Beim Pul-Braiding-Verfahren handelt es sich um eine Variante des Pul-winding-Verfahrens, bei dem es möglich ist, mehrere verschiedene Schichten Fasermaterial in einer Flechtstruktur, zu verarbeiten.

Beim Pul-preforming-Verfahren werden vorgefertigte Preforms aus Fasermaterial verwendet, um dem Profil die notwendigen Eigenschaften zu geben. Dies führt insbesondere zu multidirektional höheren Festigkeitswerten. Unter Preforms werden dabei definierte Gewebe, Gelege, Schläuche oder andere vorgefertigte Trockenpreforms verstanden, die im kontinuierlichen Prozess mittels Tauchtränkung bzw. Injektion mit dem Matrixmaterial verbunden werden. In dieser Variante des Verfahrens kann der Schaumkern bei der Herstellung der Preforms eingebracht werden. Die Tränkung mit dem Harz erfolgt entsprechend an dem, den Schaumkern enthaltenden, Preform. Durch die geschlossene Porenstruktur des PMI-Schaummaterials werden dabei nur an der Außenfläche vorhandene offene Poren mit dem Harz gefüllt.

In Bezug auf Verfahrensschritt c) kann hier das gleiche Fasermaterial wie zu Verfahrensschritt b) beschrieben eingesetzt werden. Insbesondere kann dieses zusätzlich, abhängig von der verwendeten Fixierung, noch mit einem Reaktivsystem oder einem Haftvermittler beschichtet sein.

In Verfahrensschritt d) erfolgt das Imprägnieren mit einem Harz. Als Harz, welches später das Matrixmaterial der Faser-Kunststoff-Verbundschale des Profils bildet, kann jedwedes für die Pultrusion geeignetes thermoplastisches Material bzw. nach Vernetzung zu einem Duroplasten umsetzbares Harz eingesetzt werden. Bevorzugt sind besagte, zu einem Duroplasten umsetzbare Harze. Insbesondere handelte s sich bei solchen um Polyester-, Vinylester-, Phenol-, PU- oder Epoxydharze, besonders bevorzugt um PU- oder Epoxydharze.

Verfahrensschritt e): Nach oder gleichzeitig zur Imprägnierung mit dem Harz kann in Verfahrensschritt e) eine Formgebung des Profils, z.B. durch kontinuierliches Thermoshaping, erfolgen. Diese Formgebung kann z.B. mittels einer oder mehrerer Werkzeugmuffen erfolgen. Insbesondere erfolgt die Formgebung in einem dem RTM-Verfahren analogen Presswerkzeug. Dazu kann für diesen Pressschritt der ansonsten kontinuierlich durchgeführte Transport des endlosen Schaumkerns, sowie die Umhüllung mit dem Fasermaterial kurzzeitig, während das Presswerkzeug geschlossen ist, gestoppt werden. Bevorzugt ist das Schaumkernmaterial dabei von dem Fasermaterial vollständig umgeben. Weiterhin ist es bevorzugt, dass mit dem Presswerkzeug die Enden des gepressten Abschnitts des endlosen Schaumkernstücks mit harzgetränkter Faserumwicklung so zusammengepresst werden, dass eine vollständige oder fast vollständige Umschließung des Schaumkerns mit dem harzgetränkten Fasermaterial gebildet wird.

Verfahrensschritt f): Parallel zu Verfahrensschritt d) oder darauf folgend erfolgt in einem - wenn darauf folgend zweiten - Werkzeug ein Aufheizen des in den Verfahrensschritten a) bis c) bzw. d) gebildeten Rohprofils. Im Falle von duroplastisch aushärtenden Harzen erfolgen damit die Aushärtung des Deckmaterials und damit auch die Fixierung der gegebenen Form des Werkstücks. Die Aushärtung des Harzes, welches auch als Verstärkungsmaterial bezeichnet werden kann, erfolgt dabei in der Regel thermisch. Die dazu verwendete Temperatur im Formgebungswerkzeug hängt von dem jeweilig verwendeten Harz ab und ist für den Fachmann leicht ermittelbar. Für einige Harze liegen solche Temperaturen zwischen 100 und 300 °C. Für Epoxidharze liegt diese Temperatur beispielsweise bevorzugt zwischen 20 und 100 °C, besonders bevorzugt zwischen 50 und 80 °C. Wie bereits ausgeführt kann es sich bei dem Harzsystem jedoch auch um ein thermoplastisches Material handeln. In diesem Fall ist es bevorzugt das Werkzeug innen auf oder über die Erweichungstemperatur dieser Thermoplaste zu heizen. Alternativ ist es auch möglich, dass das thermoplastische Harz in Verfahrensschritten c) bis e) oberhalb der Schmelz- bzw. Glasübergangstemperatur auf die Fasern aufgetragen wird, und die "Aushärtung" erst in Verfahrensschritt f) durch Kühlung erfolgt.

In einer besonderen Ausführungsform der Erfindung werden so genannte Hybridrovings eingesetzt. Diese werden auch Mingled oder Comingled Yarns genannt. Diese Hybridrovings werden als Faserbündel, die Fasern aus dem Fasermaterial der Deckschicht und weiteren Fasern, die aus dem das Matrixmaterial bildenden Thermoplasten bestehen, eingesetzt. Damit erfolgt Verfahrensschritt d) in gewisser Weise zum Teil zusammen mit Verfahrensschritt b) bzw. c) und optional e) in der Art, dass hier die Fasern zusammen verwoben werden, und andererseits in Verfahrensschritt f), in dem die Thermoplast-Fasern das Matrixmaterial bildend aufgeschmolzen werden.

Die Kühlung kann schlicht bei der Entnahme durch die Umgebungstemperatur erfolgen. Dies kann zusätzlich z.B. durch Gebläse unterstützt werden. Auch ist es möglich, dass der Transportschlitten gekühlt ist. In letzterer Variante ist es bevorzugt, dass es einen Transportschlitten gibt, der alle gleichzeitig hergestellten Profile aufnehmen kann oder aber es für jedes dieser Profile einen eigenen, parallel zu den anderen Transportschlitten bewegten Schlitten gibt. Idealerweise bildet dabei die Innenseite der Aufnahmevorrichtung des oder der Transportschlitten die Form der formgegebenen Abschnitte der Profile ab. Im Falle von thermoplastischen Harzen erfolgt dabei auch die Härtung der Deckschicht. Zur Kühlung kann ein Luft, Wasser oder andere Kühlmittel enthaltener Werkzeugmantel vorliegen. Die Kühlung erfolgt in der Regel bei Temperaturen zwischen 0 und 120 °C, bevorzugt zwischen 10 und 50 °C und besonders bevorzugt zwischen 20 und 30 °C.

Ein großer Vorteil dieser Formgebung ist, dass sie kontinuierlich erfolgen kann, und dass man so zunächst ein in Abschnitte unterteiltes Endlosprofil erhält. Dieses Endlosprofil wird am Ende der Anlage in Verfahrensschritt h) in einzelne Werkstücke mit gewünschter Länge vollautomatisch getrennt.

Um das Verfahren kontinuierlich betreiben zu können, müssen dazu das Werkzeug zur Formgebung in Verfahrensschritt e) und optional d), welches sich dazu insbesondere auf einem Schlitten befindet, und der Transportschlitten aus Verfahrensschritt g) in jeweils einander entgegengesetzter Richtung hin und her bewegt werden. Dabei erreichen beide Werkzeuge möglichst gleichzeitig den jeweiligen Wendepunkt, nach dessen Erreichen das Werkzeug und der Transportschlitten in die jeweils entgegengesetzte Richtung bewegt werden.

An dem ersten Wendepunkt der beiden Werkzeuge sind diese dabei voneinander maximal weit entfernt. In dieser Stellung erfolgen bevorzugt gleichzeitig die Entnahme des fertigen Profils, bzw. - im Weiteren gleichbedeutend - Werkstücks aus dem Transportschlitten und die Aufnahme das mit dem Fasermaterial umwickelten Schaumkerns in das Werkzeug zur Formgebung. Danach wird das Werkzeug zur Formgebung geschlossen und zuvor der Transportschlitten geöffnet. Zuvor wurde das Werkzeug zur Formgebung, welches in dieser Phase leer ist, geöffnet vom anderen Wendepunkt in diese Position gefahren.

An dem zweiten Wendepunkt haben die beiden Werkzeuge die zueinander nächste Position erreicht. An dieser Stelle wird das Werkzeug zur Formgebung wiederum geöffnet und der Transportschlitten geschlossen. Dabei nimmt der Transportschlitten ein Segment des Endlosprofils auf, das zuvor frei hing, während das Werkzeug zur Formgebung ein Segment freigibt, das im weiteren zunächst frei hängt und derart transportiert wird. Der Transport des Endlosprofils erfolgt nun durch den Transportschlitten, während das Werkzeug zur Formgebung wieder geöffnet in die Anfangsposition zurückfährt.

Alternativ, jedoch etwas aufwendiger wird der aufgeheizte, in Verfahrensschritt f) geformte Abschnitt des Profils von dem Werkzeug zur Formgebung in den transportschlitten an der Stelle, an der sich beide Schlitten am nächsten sind überführt. Dazu sind beide Werkzeuge bereits an dieser Position kurzzeitig simultan geöffnet. Zum Transport des Endlosprofils und der Übertragung aus dem Werkzeug in den Transportschlitten gibt es mehrere Möglichkeiten. So kann das Endlosprofil über Rollen oder Haken geschoben werden. Es ist auch möglich, dass das Endlosprofil vor Verfahrensschritt g) mit entsprechenden Vorrichtungen gezogen wird.

Bevorzugt erfolgt der Transport während des gesamten Verfahrens über das Werkzeug zur Formgebung und den Transportschlitten, genauer über das jeweilige Werkzeug, das gerade einen Abschnitt des Endlosprofils enthält.

Verfahrensschritt h): Nach dem Öffnen des Transportschlittens erfolgt das Trennen der einzelnen Profile mittels Schneiden Sägen oder mittels einer anderen geeigneten Methode. Dieses Trennen erfolgt in der Regel gleichzeitig zur Formgebung eines anderen Profilabschnitts in Verfahrensschritten d) und e), wenn zur Formgebung der Transport des Endlosprofils gestoppt ist. Nach dem Trennen erfolgen dann die Entnahme des fertigen Werkstücks beispielsweise mittels eines Roboterarms und die optionale Aufnahme in ein Lagersystem.

Die mittels des erfindungsgemäßen Verfahrens hergestellten Profilbauteile sind in Sandwichbauweise mit Schaumkernen ausgelegt. Ein großer Vorteil des erfindungsgemäßen, neuen Verfahrens ist, dass dieses in einem kontinuierlichen Prozess durch zwei aufeinander abgestimmte Pressen - dem ersten und dem zweiten Werkzeug - durchgeführt werden kann, und dass nachträglich problemlos Inserts, wie zum Beispiel Schrauben oder Haken, im Mantelmaterial verankert werden können, ohne dass das Material dabei instabil würde oder das gesamte Profil unter großer Gewichtszunahme konstruiert werden müsste. Weiterhin können folgende Vorteile genutzt werden:
- Kontinuierliche Herstellung komplexer Geometrien mit Hinterschnitten und Querschnittsänderungen.
- Insbesondere eine zusätzliche Variabilität der Formgebung, da lokal zusätzliches Material aufgebracht werden kann.
- Besonders kurze Prozesszeiten, kurze Zykluszeiten, enge Fertigungstoleranzen, schnelle Aushärtezeiten und ein hoher Durchsatz sind möglich. Damit ergibt sich eine Großserientauglichkeit.
- Hohe Freiheitsgrader bezüglich Hartschaum-, Faser- und Matrixmaterial des Mantels.
- Das Profil kann durch die Werkzeuge abgezogen und unter Spannung gehalten werden. Dadurch sind optimale Faserorientierungen erreichbar.
- Optionale Verbindung der einzelnen umgeformten Kernwerkstoffen durch Kupplungsverbindungen

Insbesondere gibt es für die vorliegende Erfindung zwei besonders bevorzugte Ausführungsformen:
Bei der ersten bevorzugten Ausführungsform des Verfahrens handelt es sich um eine als Pul-Press-Verfahren zu bezeichnete Variante. Bei dieser Ausführungsform erfolgen die Verfahrensschritte a) bis f) in voneinander getrennten Werkzeugen bzw. Vorrichtungen. Diese Ausführungsform ist mit eher geringem Umbau in bestehenden Pulltrusionsanlagen realisierbar und insbesondere für geformte, jedoch in Transportrichtung eher gerade Werkstücke geeignet.

Bei der zweiten bevorzugten Ausführungsform des Verfahrens handelt es sich um eine als Pul-Shape-Verfahren zu bezeichnete Variante. Im Pul-Press-Verfahren können nicht beliebige bzw. sehr hohe Komplexitätsgrade der Profile verarbeitet werden. Daher stellt, dass Pul-Shape-Verfahren eine Erweiterung dar. Bei diesem Pul-Shape-Verfahren handelt es sich bei dem ersten und dem zweiten Werkzeug um das gleiche Werkzeug. Weiterhin werden die Verfahrensschritte d), e) und f) gleichzeitig in diesem Universalwerkzeug durchgeführt. Dies bedeutet, dass es sich bei diesem Werkzeug um eine auf Schlitten bewegte Vorrichtung, die beheizbar ist und in die das Harz eingeleitet wird, handelt. In diesem Formgebungswerkzeug erfolgen somit simultan zueinander die endgültige Formgebung, das Aushärten des Harzes, eine Kalibrierung und der Transport. Mit der Kalibrierung ist damit ein eher kurzes Tempern der Harzzusammensetzung gemeint.

Mit dem Pul-Shape-Verfahren können zusätzlich weitere Vorteile, wie z.B. die Realisierung höherer Umformgrade, ein besonders gut zu erzielendes Faser-Matrix-Verhältnis und die Realisierung eines besonders schlanken Prozesses mit wenigen Schritten und entsprechenden Kostenvorteilen, erzielt werden. Weiterhin führt insbesondere die Verwendung dieser Ausführungsform zu einem geringeren Materialverschnitt und zu einer Harz-Injektion bei gleichzeitiger endgültiger Formgebung, was wiederum zu einer besonders ausgeprägten Formtreue führt.

Sowohl das Pul-Shape-Verfahren, als auch das Pul-Press-Verfahren lassen sich dabei mit Verfahrensaspekten der zuvor erwähnten Pul-preforming-, Pul-Winding- oder Pul-Braiding-Verfahren kombinieren.

Mit diesem neuartigen Verfahren- unabhängig von der Ausführungsform - können verschiedenartige Profile hergestellt werden. Die Profile können eine oder mehrere Kammern aufweisen. Profile mit einer Kammer können z.B. als Rundrohr oder auch als Kammerprofil in rechteckiger oder quadratischer Form vorliegen. Auch ist es möglich, Profile mit komplexer Form, d.h. zwei oder mehreren verschieden geformten oder unterschiedlich großen Kammern, herzustellen. Rundrohre können beispielsweise neben einer einfachen runden Form, mit rundem Schaumkern und rundem Mantel, z.B. auch einen runden Schaumkern und einen eckigen Mantel, bzw. einen eckigen Schaumkern und einen runden Mantel, aufweisen. Unabhängig von der Form und der Anzahl Kammern kann das Endlosprofil mit unterschiedlichen Wandstärken bzw. Schaumkerngrößen hergestellt werden.

Erfindungsgemäß ist es insbesondere möglich, insbesondere mittels des beschriebenen Pul-Shape-Verfahrens, gebogene oder auch in Transportrichtung ungleichmäßig geformte Werkstücke bzw. Profile zu realisieren.

Das für den Schaumkern verwendete Material ist bevorzugt Poly(meth)acrylimid, im Text kurz als P(M)I bezeichnet. Die Formulierung (Meth)acryl- steht dabei für Methacryl-, Acryl- oder für Mischungen aus beiden. Besonders bevorzugt sind PMI-Schäume. Solche PMI-Schäume werden normalerweise in einem zweistufigen Verfahren hergestellt: a) Herstellung eines Gusspolymerisats und b) Aufschäumen dieses Gusspolymerisats. Alternativ können aber auch Schaumkerne aus anderen Hartschaummaterialien, wie insbesondere PET-, PVC-, PU- oder PP-Schäume eingesetzt werden. PMI-Schäume haben dabei jedoch den großen Vorteil, dass diese im ersten und/bzw. zweiten Werkzeug nachschäumen und dadurch zu einer besonders guten Grenzhaftung zwischen Schaumkern und den Deckschichten führt.

Die als Kernmaterial für das Verfahren benötigten Schaumteile können entweder durch eine Herstellung mittels eines In-mold-Foamings hergestellt werden, oder aber bevorzugt aus aufgeschäumten Schaumplatten, welche als Gusspolymerisate hergestellt werden können, herausgeschnitten, gesägt oder gefräst werden. Dabei können bevorzugt mehrere Schaumteile aus einer Platte geschnitten werden. In einer besonderen Alternative kann auch der Verschnitt aus der Herstellung größerer PMI-Schaumteile, wie sie z.B. im Flugzeugbau oder bei der Herstellung von Windkraftwerken verwendet werden, optional nachgeschnitten werden und zum Einsatz kommen.

Die Herstellung solcher PMI-Schäume ist dem Fachmann grundsätzlich bekannt und kann beispielsweise in EP 1 444 293, EP 1 678 244 oder WO 2011/138060 nachgelesen werden.

Als Material für den Schaumkern werden besonders bevorzugt PMI-Schäume in einem Dichtebereich von 30 bis 200 kg/m3 eingesetzt. Als PMI-Schäume seien insbesondere ROHACELL®-Typen der Firma Evonik Industries AG genannt.

Gesägte, geschnittene oder gefräste Schaumkernstücke haben dabei den Vorteil gegenüber mittels In-mold-Foaming hergestellten, dass diese an der Oberfläche offene Poren aufweisen. Beim Inkontaktbringen mit den Fasern und der anschließenden Imprägnierung mit dem Harz dringt ein Teil des Harzes in diese offenen Poren an der Schaumkernoberfläche ein. Dies hat den Vorteil, dass nach Aushärtung eine besonders starke Haftung an der Grenzfläche zwischen Schaumkern und Mantelmaterial erhalten wird.

Wie bereits ausgeführt können mittels des erfindungsgemäßen Verfahrens auch andere Hartschaumstoffe verarbeitet werden. Dabei kann es sich insbesondere um harte PET-, PVC-, PP- oder PU-Schäume handeln.

PVC-Hartschäume werden zumeist als Sandwichmaterial im Bootsbau, Rotorblättern oder Kraftfahrzeugen im Verbund mit Deckschichten eingesetzt. PVC-Schaum ist im Dichtebereich von 25 bis 300 kg/m³ kommerziell verfügbar und wird in großem Umfang eingesetzt. PVC-Schäume weisen eine besonders hohe Hochtemperaturbeständigkeit, jedoch nur limitierte mechanische Belastbarkeiten auf.

PP-Schäume sind vor allem als Isolationsmaterial, in Transportbehältern und als Sandwichmaterial bekannt. PP-Schäume können Füllstoffe enthalten und sind zumeist in einem Dichtebereich zwischen 20 bis 200 kg/m3 kommerziell verfügbar. Zur besseren Anhaftung können insbesondere die Oberflächen eines PP-Schaums vor Verfahrensschritt a) mit einer Klebschicht oder einem Haftvermittler versehen werden.

PU-Hartschäume wiederum zeichnen sich gegenüber PU-Weichschäumen durch eine geschlossenere Porenstruktur und einen höheren Vernetzungsgrad aus. PU-Hartschäume können zusätzlich größere Mengen anorganischer Füllmaterialien enthalten.

Neben dem besagten Verfahren sind gleichsam neuartige Profile, bestehend aus einem Hartschaumkern, insbesondere aus einem PMI-Schaumkernen und einem Deckmaterial, welches aus einem Fasermaterial und einem Matrixmaterial, genauer einem Duroplasten oder einem Thermoplasten gebildet wurde, Teil der vorliegenden Erfindung. Bezüglich der dabei zum Einsatz kommenden Materialien gilt das gleiche wie zuvor bezüglich des Verfahrens beschrieben. Bevorzugt handelt es sich bei dem Matrixmaterial um einen Duroplasten, insbesondere um ein ausgehärtetes Epoxyd- oder PU-Harz. Bei dem Fasermaterial handelt es sich insbesondere um Kohle-, Aramid- oder Glasfasern.

Ein solches erfindungsgemäßes, mit einem Hartschaum gefülltes Profil zeichnet sich insbesondere dadurch aus, dass das mit einem Hartschaum gefüllte Profil zwischen Schaumkern und Deckmaterial keine Klebeschicht und keine Fügestellen aufweist. Weiterhin ist der Schaumkern vollständig oder mit nur sehr kleinen Lücken mit dem Deckmaterial umschlossen ist. Sehr kleine Lücken bedeutet dabei, dass bei der Formgebung in dem Presswerkzeug, bei dem die Enden des Abschnitts, wie zuvor beschrieben, zusammengepresst werden, kleine Bereiche das Schaumkerns weiterhin sichtbar sein können. Insbesondere bevorzugt erfolgt das Pressen jedoch dergestalt, dass an dem fertigen Profil überhaupt kein Schaumkern von außen mehr zu erkennen ist.

Insbesondere zeichnet sich das erfindungsgemäße Material dadurch aus, dass das Deckmaterial Bereiche aufweist, die beidseitig abgeschnittene Fasern enthalten, die maximal 80%, bevorzugt maximal 50% der Länge des Profils aufweisen.

Gleichsam bevorzugt weist der Hartschaumkern an der Grenzfläche zwischen Hartschaumkern und dem Deckmaterial offene, mit Matrixmaterial gefüllte Poren auf.

Ergänzend oder unabhängig davon kann der Hartschaum Inserts, insbesondere metallische Inserts aufweisen. Solche Inserts dienen später als Anbindungsstellen für das Bauteil bei der Verwendung z.B. im Automobil- oder Flugzeugbau. Dabei kann als Insert z.B. ein Metallblock eingebracht werden, in den dann anschließend ein Gewinde, welches später dann verschraubt werden kann, eingefräst wird. Dieses kann beispielsweise in Form eines Rohres vorliegen. Ein solches Rohr kann beispielsweise bei der Verwendung im Karosseriebau als Kabelleitung fungieren. Bei solchen Zusätzen handelt es um eine besondere Form der Inserts, die bereits während des Produktionsprozesses

Ein erfinundgsgemäßes, neuartiges Profil mit einem Hartschaumkern hat große Vorteile gegenüber dem Stand der Technik. Das Fehlen von Fügestellen trägt zu einer gleichmäßigen mechanischen Belastbarkeit und einer gesteigerten Gesamtstabilität des Profils bei. Das Fehlen von Klebeschichten trägt zu Gewichtseinsparungen und einer deutlich vereinfachten Herstellbarkeit, bei mindestens vergleichbarer mechanischer Belastbarkeit, bei. Die lokale Verstärkung mit Fasern einer begrenzten Länge wiederum erleichtert das spätere Hinzufügen von Inserts, welche in Form von Haken oder mittels eines Schraubgewindes in der Deckschicht verankert werden. Für den Fall, dass Inserts bereits bei der Herstellung des Formteils eingebaut werden, führt eine Verstärkung des diese Inserts umgebenden Materials zu einer weiteren Stabilisierung des Profils.

Die erfindungsgemäßen Werkstücke haben darüber hinaus sehr gute mechanische Eigenschaften, insbesondere in Bezug auf sehr gute Beul-, Knick- und Drucksteifigkeiten. Sie zeigen auch besonders hohe Druckfestigkeiten und eine erhöhte Energieaufnahme bei einer Schlagbelastung, so dass sie bei einer Verwendung im Automobilbau z.B. in einem Crashfall zu einer Verbesserung der Karosseriestabilität beitragen. Darüber hinaus können sie im Vergleich zu Metallteilen, insbesondere gegenüber nicht gefüllten Hohlkörpern, in einer Karosserie zu einer besseren Akustik, d.h. zu einer geringeren Geräuschentwicklung durch das Fahrgestell bei. Diese Verbesserung der mechanischen Eigenschaften gilt insbesondere für die neuralgischen Bereiche des Profils.

Die erfindungsgemäßen Profile mit einem Schaumkern, insbesondere mit einem PMI-Schaumkern bzw. die nach dem erfindungsgemäßen Verfahren hergestellten, einen Schaumkern aufweisenden Formkörper, der einen teilweise verstärkten Mantel aus einem Fasermaterial aufweist, können vielfältig Anwendung finden. Dabei ist ein Hauptaugenmerk, ohne dass diese Beschreibung in irgendeiner Form einschränkend zu verstehen ist, auf den Leichtbau gerichtet. Dies betrifft insbesondere den Automobil-, Nutzfahrzeugs-, Schiffs-, Flugzeug-, Hubschrauberbau, die Konstruktion von Anlagen zur Windenergiegewinnung, die Robotertechnik und die Raumfahrt. Im Automobilbau sei insbesondere die Konstruktion von Dachriegeln oder Bodenverstrebungen beispielhaft genannt. In Flugzeugen sein beispielhaft die Verwendung als Kabinenbodenabstützung aufgeführt. Bei einem solchen Einsatz stellen die erfindungsgemäßen Profile eine mechanisch nahezu gleichwertige, dabei jedoch deutlich leichtere Alternative zu Aluminium oder Stahl dar.

### Index zu den Zeichnungen

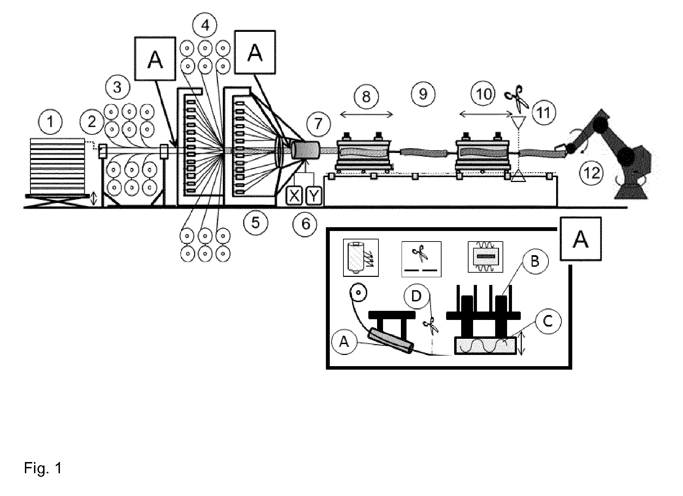

Fig.1 stellt beispielhaft den schematischen Aufbau einer für das erfindungsgemäße Verfahren (in der Au8sführungsform eines Pul-Shape-Verfahren) geeignete Anlage dar. Folgend der Index zur Fig.1:
(1) Schaumkern (Vorlage)
(2) Schaumkern (Einfügen in Anlage und Verbinden mit Ende des letzten Schaumkerns)
(3), (4) Faserzuführung, unidirektional
(4) Wickel-, Flechtvorrichtung (Pul-Braiding)
(5) Harzimpregnation
(6) Harzreservoir (hier 2K-System mit Komponenten A und B)
(7) Werkzeug für Preforming
(8) Werkzeug zur Formgebung und Heizen in Schlittenform
(9) Transportstrecke mit frei hängendem Profil
(10) Transportschlitten
(11) Schneidevorrichtung
(13) Handlingsystem Für fertiges Profil

A (Kasten): Lage zweier erfindungsgemäßen Vorrichtungen zur lokalen Belegung mit Fasermaterial
A (Kreis) Führungselement
B Positionierungselement
C Fixierungselement
D bewegbares Trennelement

Zu der Zeichnung sei angemerkt, dass diese nur schematisch die genannte Ausführungsform darstellt. So ist z.B. die Anlage wie dargestellt mit zwei unidirektionalen Faserführungen, zwei erfindungsgemäßen Vorrichtungen zur lokalen Belegung und zwei Pul-Braiding-Vorrichtungen ausgestattet. Von diesen vier Vorrichtungen reichen naturgemäß z.B. auch eine Pul-Braiding-Vorrichtungen und erfindungsgemäße Vorrichtung zur lokalen Belegung, um das Verfahren durchzuführen.

## Patentansprüche

1. Verfahren zur kontinuierlichen Herstellung von faserverstärkten, mit einem Schaumkern gefüllten Profilen, **dadurch gekennzeichnet, dass** das Verfahren folgende Verfahrensschritte aufweist:
a) Einführen von Schaumkernen und Verbinden des neu eingeführten Schaumkerns mit dem Ende des zuletzt eingeführten Schaumkerns,
b) Umwickeln des Schaumkerns mit einem Fasermaterial, wobei dies mittels mindestens einem Verfahrensschritt in Form eines modifizierten Pul-Preforming-, Pul-Winding-, Pul-Braiding-Verfahrens oder einer unidirektionalen Auflage erfolgt,
c) Lokal begrenzte Auflage eines Fasermaterials mittels einer Vorrichtung, aufweisend A ein Führungselement, B ein Positionierungselement, C ein Fixierungselement und D ein bewegbares Trennelement, wobei Verfahrensschritt c) vor, nach oder zwischen verschiedenen Ausführungen des Verfahrensschritts b) erfolgen kann,
d) Imprägnieren des gewickelten Fasermaterials mit einem Harz,
e) optionales Vorformen des umwickelten Schaumkerns in einem oder mehreren optionalen ersten Werkzeugen,
f) Heizen und dabei optionales Aushärten des Harzes in mindestens einem zweiten Werkzeug auf Schlitten,
g) Transport und optionales Abkühlen des umwickelten Schaumkerns in einem Transportschlitten und
h) Trennen einzelner Profile mittels Schneiden, Sägen oder einer anderen Methode und Entnahme des fertigen Werkstücks,
wobei der oder die Schlitten mit dem zweiten Werkzeug und der Transportschlitten in jeweils einander entgegengesetzter Richtung bewegt werden.

2. Verfahren gemäß Anspruch 1, **dadurch gekennzeichnet, dass** der Schaumkern in Form mehrerer, aneinander gereihter Einzelstücke kontinuierlich in die Pultrusionsanlage geführt wird und diese Einzelstücke mittels Kleben, Stecken oder durch Hinzufügen eines Kupplungsstücks miteinander verbunden werden.

3. Verfahren gemäß Anspruch 1 oder 2, **dadurch gekennzeichnet, dass** es sich bei dem Fasermaterial um Kohlefasern, Glasfasern, Polymerfasern, insbesondere Aramidfasern, oder Textilfasern, bevorzugt um Aramid- oder Kohlefasern, die in Form einzelner Fasern, Rovings und/oder Vliese, Geweben und/oder Gelegen eingesetzt werden, handelt.

4. Verfahren gemäß mindestens einem der Ansprüche 1 bis 3, **dadurch gekennzeichnet, dass** es sich bei dem Harz um einen Duroplasten, insbesondere um ein Material, das aus einem Polyester-, Vinylester-, Phenol-, PU- oder Epoxydharz, bevorzugt aus einem PU- oder einem Epoxydharz gebildet wurde, handelt.

5. Verfahren gemäß mindestens einem der Ansprüche 1 bis 4, **dadurch gekennzeichnet, dass** es sich bei dem Schaumkern um einen Kern aus Poly(meth)acrylimid handelt.

6. Verfahren gemäß Anspruch 5, **dadurch gekennzeichnet, dass** als Material für den Schaumkern Polymethacrylimid in einem Dichtebereich von 30 bis 200 kg/m³ verwendet werden.

7. Verfahren gemäß mindestens einem der Ansprüche 1 bis 6, **dadurch gekennzeichnet, dass** das Verfahren als Pul-Press-Verfahren durchgeführt wird, bei dem die Verfahrensschritte a) bis f) in voneinander getrennten Werkzeugen bzw. Vorrichtungen erfolgen.

8. Verfahren gemäß mindestens einem der Ansprüche 1 bis 6, **dadurch gekennzeichnet, dass** das Verfahren als Pul-Shape-Verfahren durchgeführt wird, bei dem es sich bei dem ersten und dem zweiten Werkzeug um das gleiche Werkzeug handelt, in dem die Verfahrensschritte d), e) und f) gleichzeitig durchgeführt werden.

9. Verfahren gemäß mindestens einem der Ansprüche 1 bis 8, **dadurch gekennzeichnet, dass** es sich bei dem Fixierungselement C um eine IR-Lampe, eine UV-Lampe, eine Plasmaquelle oder um eine Düse, die ein Haftharz oder einen Klebstoff aufsprüht, handelt.

10. Verfahren gemäß mindestens einem der Ansprüche 1 bis 9, **dadurch gekennzeichnet, dass** es sich bei dem beweglichen Trennelement um eine oder zwei Klingen oder um eine Säge handelt, und dass es sich bei dem Positionierungselement um einen Stempel oder eine Hydraulikvorrichtung handelt.

11. Ein Hartschaum gefülltes Profil, bestehend aus einem Schaumkern und einem Deckmaterial, **dadurch gekennzeichnet, dass** es sich bei dem Deckmaterial um mit einem Fasermaterial verstärkten Duroplasten oder Thermoplasten und bei dem Schaumkern um einen Hartschaum handelt, dass das mit dem Hartschaum gefüllte Profil zwischen Schaumkern und Deckmaterial keine Klebeschicht und keine Fügestellen aufweist, dass der Schaumkern vollständig oder mit nur sehr kleinen Lücken mit dem Deckmaterial umschlossen ist, und dass das Deckmaterial Bereiche aufweist, die beidseitig abgeschnittene Fasern enthalten, die maximal 80% der Länge des Profils aufweisen.

12. Ein Hartschaum gefülltes Hohlprofil gemäß Anspruch 11, **dadurch gekennzeichnet, dass** das der Hartschaumkern an der Grenzfläche zwischen Hartschaumkern und Mantelmaterial offene, mit Matrixmaterial gefüllte Poren aufweist.

13. Ein Hartschaum gefülltes Hohlprofil gemäß Anspruch 11 oder 12, **dadurch gekennzeichnet, dass** es sich bei dem Deckmaterial um einen mit Kohle- oder Glasfasern verstärktes, ausgehärtetes Epoxid- oder PU-Harz handelt, und dass es sich bei dem Hartschaum um einen PMI-Schaum handelt.

14. Verwendung der mit einem Hartschaum gefüllten Profile gemäß mindestens einem der Ansprüche 11 bis 13 als Sandwichbauteil im Automobil-, Nutzfahrzeugs-, Schiffs-, Flugzeug-, Hubschrauberbau, bei der Konstruktion von Anlagen zur Windenergiegewinnung, in der Robotertechnik oder in der Raumfahrt.
